# EUROPÄISCHE PATENTSCHRIFT

(11) **EP 2 432 651 B1**
(45) Veröffentlichungstag und Bekanntmachung des Hinweises auf die Patenterteilung: **04.09.2013**
(21) Anmeldenummer: 09753114.9
(22) Anmeldetag: 18.11.2009
(51) Int. Cl.: B60C 9/00

(54) **FESTIGKEITSTRÄGERLAGE AUS STAHLKORDEN FÜR GÜRTEL VON FAHRZEUGLUFTREIFEN**
REINFORCEMENT LAYER MADE OF STEEL CORDS FOR BELTS OF PNEUMATIC VEHICLE TIRES
NAPPE DE RENFORCEMENT CONSTITUÉE DE CÂBLES D'ACIER POUR CEINTURE DE PNEUMATIQUE DE VÉHICULE

(30) Priorität: 20.05.2009 DE 102009025850
(43) Veröffentlichungstag der Anmeldung: 28.03.2012
(73) Patentinhaber: Continental Reifen Deutschland GmbH, 30165 Hannover (DE)
(72) Erfinder: BLÜMEL, Viktor, 30459 Hannover (DE); REESE, Wolfgang, 31228 Peine (DE)
(74) Vertreter: Finger, Karsten
(86) Internationale Anmeldenummer: PCT/EP2009/065362
(87) Internationale Veröffentlichungsnummer: WO 2010/133261

(56) Entgegenhaltungen:
- EP-A- 0 502 729
- DE-A1- 4 120 554
- DE-A1- 10 122 812
- US-A1- 2004 016 497

## Beschreibung

Die Erfindung betrifft eine Festigkeitsträgerlage für Fahrzeugluftreifen, wobei die Festigkeitsträger Stahlfilamente oder Stahlkorde sind, welche innerhalb der Festigkeitsträgerlage im Wesentlichen parallel und beabstandet zueinander angeordnet sind und in Kautschukmaterial eingebettet sind, wobei sämtliche Filamente in dieser Festigkeitsträgerlage einen Durchmesser kleiner als 0,24 mm aufweisen.

Stahlfilamente und Stahlkorde als Festigkeitsträger in Festigkeitsträgerlagen für Fahrzeugluftreifen sind bekannt. Ein Beispiel für einen Verband aus Festigkeitsträgerlagen ist der Gürtel eines Fahrzeugluftreifens. Die den Gürtelverband in PKW-Fahrzeugluftreifen bildenden Gürtellagen sind üblicherweise durch Stahlkorde als Festigkeitsträger verstärkt. Dabei bestehen viele heutzutage im PKW-Luftreifen verbaute Gürtellagen aus in eine Kautschukmischung eingebetteten, untereinander parallel zueinander verlaufenden Stahlkorden der Konstruktion 2 x 0,30 mm. Die Kordkonstruktion 2 x 0,30 mm bedeutet, dass zwei Filamente von 0,30 mm Durchmesser miteinander zu einem Kord verdreht sind, so dass der Kord einen Durchmesser von ca. 0,60 mm hat.

Manchmal werden auch Kordkonstruktionen verwendet, bei denen der Kord von einer Wendel umgeben ist.

Eine Festigkeitsträgerlage gemäß dem Oberbegriff von Anspruch 1 ist aus der US 2004/0016497 A1 bekannt geworden. Jedoch müssen diese Filamente aus UHT-Stahl gefertigt sein.

Der Begriff "Filament" meint einen einzelnen Draht.

Der Begriff "Kord" meint zwei oder mehr miteinander verdrehte Filamente.

Der Begriff "Wendel" meint einen meist dünneren Draht, der den Kord in gegenläufiger Schlagrichtung umschlingt.

Die Bestrebungen der Reifenentwicklungen gehen beständig dahin, das Gewicht des Reifens weiter zu reduzieren und den Rollwiderstand des Reifens weiter zu verringern.

Es ist daher die Aufgabe der Erfindung, einen Fahrzeugluftreifen bereitzustellen, dessen Gewicht weiterhin reduziert ist und dessen Rollwiderstand weiterhin verringert ist.

Die Aufgabe wird gelöst, indem jeweils maximal zwei Filamente zu einem Kord verdreht sind und sämtliche Filamente aus Stahl der Bruchfestigkeitsklasse NT oder HT sind.

Durch die Reduzierung des Festigkeitsträgerdurchmessers ist erreicht, dass ein geringeres Kautschukvolumen zur Einbettung der Festigkeitsträger innerhalb der Festigkeitsträgerlage benötigt wird, wodurch der Rollwiderstand des Reifens verringert wird. Durch die Reduzierung des Festigkeitsträgerdurchmessers und das geringere Kautschukvolumen ist auch an Gewicht des Reifens eingespart, wodurch ebenfalls sein Rollwiderstand verringert wird.

Eine Kordkonstruktion von beispielsweise 2 x 0,22 mm weist einen Korddurchmesser von ca. 0,44 mm auf. Durch diesen verringerten Korddurchmesser ist die Festigkeitsträgerlage dünner, so dass ein geringeres Kautschukvolumen zur Einbettung der Stahlkorde innerhalb dieser Lage notwendig ist. Die durch den Einsatz der verringerten Festigkeitsdurchmesser verringerte Festigkeit der Festigkeitsträgerlage kann mit für den Fachmann bekannten Maßnahmen am Fahrzeugluftreifen bei Bedarf kompensiert werden.

Die Korde bestehen aus Stahl. Es kann Stahl der Bruchfestigkeitsklassen NT oder HT Verwendung finden, wobei zum Beispiel bei einem Filament-Durchmesser von 0.20mm
- NT < 3400 MPa
- HT >= 3400 MPa
- ST >= 3650 MPa
- UHT >= 4000 MPa charakterisiert.

In einer bevorzugten Ausführungsform weisen die Filamente einen Durchmesser von 0,1 mm - 0,24 mm auf, besonders bevorzugt einen Durchmesser von 0,175 mm.

Zweckmäßig ist es, dass jeder Festigkeitsträger ein Monofilament aus einem einzigen Filament ist. Hierdurch ist der Durchmesser des Festigkeitsträgers nochmals verringert, so dass ebenfalls das für die Einbettung in der Lage notwendige Kautschukvolumen nochmals verringert ist.

In einer besonders bevorzugten Ausführungsform ist jeder Festigkeitsträger ein Stahlkord der Konstruktion 2 x 0,175 mm.

Die erfindungsgemäße Festigkeitsträgerlage kann in PKW-, Van-, Light Truck-, und LKW-Luftreifen eingesetzt werden.

## Patentansprüche

1. Festigkeitsträgerlage für Gürtel von Fahrzeugluftreifen, wobei die Festigkeitsträger Filamente oder Korde aus Stahl sind, welche innerhalb der Festigkeitsträgerlage im Wesentlichen parallel und beabstandet zueinander angeordnet sind und in Kautschukmaterial eingebettet sind, wobei sämtliche Filamente in dieser Festigkeitsträgerlage einen Durchmesser kleiner als 0,24 mm aufweisen,
**dadurch gekennzeichnet, dass** sämtlicheFilamenteausStahlder Bruchfestigkeitsklasse NT oder HT sind und dass jeweils maximal zwei Filamente zu einem Kord verdreht sind.

2. Festigkeitsträgerlage nach Anspruch 1,
**dadurch gekennzeichnet, dass** sämtliche Filamente einen Durchmesser von 0,1 mm - 0,24 mm, vorzugsweise von 0,15 mm - 0,2 mm, aufweisen.

3. Festigkeitsträgerlage nach zumindest einem der vorangehenden Ansprüche,
**dadurch gekennzeichnet, dass** jeder Festigkeitsträger ein Monofilament (d.h., aus einem einzigen Filament) ist.

4. Festigkeitsträgerlage nach zumindest einem der vorangehenden Ansprüche,
**dadurch gekennzeichnet, dass** jeder Festigkeitsträger wenigstens ein vorverformtes Filament enthält.

5. Festigkeitsträgerlage nach zumindest einem der vorangehenden Ansprüche,
**dadurch gekennzeichnet, dass** der Festigkeitsträger eine Wendel aufweist.

## Claims

1. Reinforcement layer for breaker belts of pneumatic vehicle tires, wherein the reinforcements are filaments or cords made of steel, which are disposed substantially parallel to and spaced apart from one another within the reinforcement layer and are embedded in rubber material, all the filaments in this reinforcement layer having a diameter of less than 0.24 mm, **characterized in that** all the filaments are made of steel of ultimate strength class NT or HT and a maximum of two filaments are twisted in each case to form a cord.

2. Reinforcement layer according to Claim 1, **characterized in that** all the filaments have a diameter of 0.1 mm - 0.24 mm, preferably of 0.15 mm - 0.2 mm.

3. Reinforcement layer according to at least one of the preceding claims, **characterized in that** each reinforcement is a monofilament (i.e. comprising a single filament).

4. Reinforcement layer according to at least one of the preceding claims, **characterized in that** each reinforcement contains at least one preformed filament.

5. Reinforcement layer according to at least one of the preceding claims, **characterized in that** the reinforcement has a spiral wrap.

## Revendications

1. Nappe de renforcement pour ceintures de bandages pneumatiques de véhicules, dans laquelle le renforcement est constitué par des filaments ou des câbles d'acier disposés à l'intérieur de la nappe de renforcement essentiellement parallèlement et à distance les uns des autres et qui sont noyés dans un matériau en caoutchouc, tous les filaments dans cette nappe de renforcement présentant un diamètre inférieur à 0,24 mm, **caractérisée en ce que** tous les filaments en acier sont de la classe de résistance à la rupture NT ou HT et **en ce que** deux filaments au maximum sont à chaque fois torsadés en un câble.

2. Nappe de renforcement selon la revendication 1, **caractérisée en ce que** tous les filaments présentent un diamètre de 0,1 mm à 0,24 mm, de préférence de 0,15 mm à 0,2 mm.

3. Nappe de renforcement selon au moins l'une quelconque des revendications précédentes, **caractérisée en ce que** chaque renforcement est un monofilament (c'est-à-dire constitué d'un seul filament).

4. Nappe de renforcement selon au moins l'une quelconque des revendications précédentes, **caractérisée en ce que** chaque renforcement contient au moins un filament préformé.

5. Nappe de renforcement selon au moins l'une quelconque des revendications précédentes, **caractérisée en ce que** le renforcement présente un filament enroulé.
